# EUROPÄISCHE PATENTSCHRIFT

(11) **EP 1 238 785 B1**
(45) Veröffentlichungstag und Bekanntmachung des Hinweises auf die Patenterteilung: **28.04.2004**
(21) Anmeldenummer: 02405053.6
(22) Anmeldetag: 30.01.2002
(51) Int. Cl.: B29C 70/44, A45C 13/10

(54) **Verfahren zur Herstellung eines profilierten, schalenartigen Gegenstands sowie eine hierzu verwendbare Form**
Method for producing a profiled shell-like article and mould useful therein
Procédé pour fabriquer un article profilé en forme de coque et moule utilisable pour celui-ci

(30) Priorität: 05.03.2001 EP 01810222
(43) Veröffentlichungstag der Anmeldung: 11.09.2002
(73) Patentinhaber: Swiss Luggage SL AG, 3018 Bern (CH)
(72) Erfinder: Gygax, Rudolf, 3084 Wabern (CH); Mischler, Jürg, 3084 Wabern (CH); Musch, Gerhard, 88090 Immenstaad (DE)
(74) Vertreter: Roshardt, Werner Alfred, Dipl.-Phys.

(56) Entgegenhaltungen:
- US-A- 4 270 964
- US-A- 5 071 338

## Beschreibung

### Technisches Gebiet

Die Erfindung betrifft ein Verfahren zur Herstellung eines profilierten, schalenartigen Gegenstands gemäß dem Oberbegriff des Patentanspruchs 1, eine Form mit einem Positiv- und einem Negativformteil zur Herstellung dieses Gegenstands gemäß dem Oberbegriff des Patentanspruchs 7, ein in die Gegenstandswand dieses Gegenstands integrierbares Zusatzelement gemäß dem Oberbegriff des Patentanspruchs 12 und einen mit dem Verfahren hergestellten Gegenstand gemäß dem Oberbegriff des Patentanspruchs 13.

### Stand der Technik

In der EP 0 914 784 ist ein Behälter, insbesondere ein Reisekoffer und dessen Herstellungsverfahren beschrieben. Die Behälterwand war hier drei- bzw. vierlagig aufgebaut. Bei einem vierlagigen Aufbau folgten drei mit Harz getränkte Polyestergewebe auf ein Carbongewebe. Auch konnte zwischen den beiden Polyestergeweben ein Schaumstoffkern eingelegt werden. Auf das Carbongewebe konnten auch vier mit Harz getränkte Polyestergewebe folgen. Wenigstens eines der Polyestergewebe war durch ein hochdrapiertes Glasgewebe ersetzbar.

Bei der Herstellung des mehrlagigen Aufbaus der bekannten Behälterwand wurde darauf geachtet, dass das Gewebe nicht erst in eine Form eingelegt und dann anschließend mit Harz bestrichen wurde. Es hatte sich nämlich gezeigt, dass bei dieser Herstellungsart unschöne kleine, jedoch sichtbare Blasen im ausgehärteten Carbongewebe verblieben. Diese Bläschen konnten vermieden werden, wenn in die Form jeweils vorher mit dem betreffenden Harz getränkte Gewebe eingelegt wurden.

Bevorzugt mehrere derart hergestellte profilierte Behälterteile wurden dann noch in ihren Formen liegend in einen mit einem Temperatur- und Druckverlauf beaufschlagbaren Autoklaven zum Aushärten gebracht.

Das dort beschriebene Herstellungsverfahren war aufwendig und durch die Verwendung eines Autoklaven auch teuer. Auch konnten bei noch so sorgfälltigen Arbeiten Blasen und kleine Falten bzw. Unebenheiten in der Behälterwand nicht vermieden werden.

In der US-A 5 071 338 sind mehrere Verfahren zur Herstellung von komplexen Schichtmaterialien beschrieben. Es wurde hier in eine Negativform ein vorzugsweise mit einem Elastomer getränktes Gewebe eingelegt. Das getränkte Gewebe konnte mit einem Nylon-Film-Haube als vakuumdichte Abdeckung abgedeckt und dann mit Vakuum beaufschlagt werden. Die Haube wurde später wieder entfernt. Es konnte aber auch mit einem Autoklaven gearbeitet werden. Anstelle des getränkten Gewebes konnten auch sogenannte "Prepregs" verwendet werden. Einer der Formteile konnte elastisch verformbar ausgebildet sein.

In der US-A 4 270 964 ist eine weitere Form mit einem Positiv- und einem Negativformteil beschrieben. Der Positivformteil war eine vorgeformte Membran aus durchsichtigem Plastikmaterial. Der Negativformteil hatte einen umlaufenden Kanal, an den eine Vakuumpumpe angeschlossen werden konnte. Zur Herstellung eines profilierten, schalenartigen Gegenstands mit Verstärkungselementen wurde zuerst das Verstärkungselement bzw. die Verstärkungselemente in den Positivformteil eingelegt und mit einem, mit aushärtenden Kunststoff getränktem Glasfasergewebe als Wandmaterial überdeckt. Das Glasfasergewebe lag immer ausserhalb des in der Positivform umlaufenden Kanals.

### Darstellung der Erfindung

### Aufgabe der Erfindung

Aufgabe der Erfindung ist es, ein preisgünstiges Verfahren aufzuzeigen, mit dem profilierte Gegenstände, welche mit einem aushärtbaren Tränkmittel getränktes Schichtmaterial haben, mit einer blasen- und "faltenfreien" Gegenstandswand insbesondere ohne Autoklaven herstellbar sind, wobei vorzugsweise die derart hergestellten Wände eine hohe mechanische Bruchstabilität vorzugsweise unter Vermeidung eines sogenannten Splitterbruches aufweisen.

### Lösung der Aufgabe

Die Aufgabe wird verfahrensmäßig dadurch gelöst, dass zur Herstellung des profilierten, schalenartigen Gegenstands in bzw. auf einen Formteil als zukünftiges Wandmaterial wenigstens ein mit einem duroplastisch aushärtenden Tränkmaterial getränktes, gewebeartiges erstes Schichtmaterial und ein thermoplastische Eigenschaften aufweisendes zweites Schichtmaterial gelegt werden. Die Form hat einen Positiv- und einen Negativformteil. Nach dem Einlegen der Schichtmaterialien wird ein Aushärtevorgang initiiert und zum Entnehmen der wenigstens teilweise ausgehärteten, die Schichtmaterialien aufweisenden Gegenstandswand wird wenigstens einer der Formteile unter bereichsweiser elastischer Verformung abgezogen. Als besonders vorteilhaft hat es sich erwiesen, wenn ein Schichtlaminat verwendet wird, in dem wenigstens ein Schichtmaterial thermoplastische und wenigstens ein anderes duroplastische Eigenschaften hat.

Duroplastische Materialien haben nämlich bei einem geringeren Gewicht eine bedeutend höhere mechanische Formstabilität als thermoplastische; auch ist deren Fließneigung geringer. Werden Duroplaste nämlich über ihre Stabilitätsgrenze beansprucht, brechen sie unter Splitterwirkung. Ein Duroplast beispielsweise als Kofferschale würde zwar eine hohe mechanische Steifigkeit und damit Stabilität ergeben; er würde jedoch bei einer Überbeanspruchung splitternd brechen. Die Bruchstücke mit ihren scharfen Kanten wären aus Sicherheitsgründen jedoch nicht tolerierbar. Ein thermoplastisches Material läßt sich hingegen bedeutend stärker verformen als ein duroplastisches Material, zeigt aber nicht dessen hohe mechanische Steifigkeit in Bezug auf gleiches Gewicht. Mit dem hier aufgezeigten Schichtenaufbau erreicht man bei der Schale eine Verhinderung eines Splitterbruches. Ein Bruch ist zwar bei extremen Beanspruchungen möglich, die Bruchstücke haften jedoch immer noch zusammen. Die Lagen des Schichtenaufbaus lösen sich hierbei nicht von einander ab; es gibt keine scharfen Kanten.

"Verheiratet" man nun beide Materialien in einem sandwichartigen Aufbau miteinander, so wird die Spitterneigung durch das thermoplastische Material stark reduziert und die geringe Steifigkeit des thermoplastischen Material durch das duroplastische Material behoben.

Bei der Verwendung einer zweiteiligen Form, bestehend aus einem besonders gestalteten Positiv- und Negativformteil, weist wie oben bereits ausgeführt das Wandmaterial wenigstens ein erstes thermoplastische und wenigstens ein zweites duroplastische Eigenschaften aufweisendens Material auf. Wenigstens eines dieser Materialien ist mit einem aushärtbaren Tränkmaterial getränkt. Die Wandmaterialien werden zwischen einen Positiv- und einen Negativformteil eingebracht, welche u.a. als Presse wirken. Wenigstens einer der beiden Formteile wird mit einem Druck- und wenigstens einer mit einem Temperaturverlauf beaufschlagt. Hierdurch ist ein raum- und preisaufwendiger Autoklav eliminierbar, was vorzugsweise die Wärmekapazität der Form und eine Wärmeübergangszeit zu den auszuhärtenden Materialien und den Formteilen verringert. Hierdurch wird eine signifikante Energieeinsparung gegenüber herkömmlichen Formen, welche in einen Autoklaven einzubringen sind, erreicht Um ein leichtes Ausformen des wenigstens teilweise ausgehärteten Gegenstands, d. h. dessen Wand, zu erreichen, ist einer der Formteile, vorzugsweise der Positivformteil, bereichsweise elastisch verformbar ausgebildet.

Wenigstens ein Schichtmaterial wird man als Gewebe wegen der leichten Verformbarkeit und der hohen Stabilität, insbesondere wegen seiner Längsstabiltät, verwenden.

Eine bekannte Form mit Positiv- und Negativformteil, wie in der US-A 5 071 338 beschrieben, hatte zwar einen elastisch verformbaren Formteil zum bessern Ausformen; die ganze Form musste jedoch in einem Autoklaven mit einem vorgegebenen Temperatur- und Druckverlauf beaufschlagt werden. Eine direkte Druck- bzw. Temperaturbeaufschlagung der Form ausserhalb eines Autoklaven, wie bei der Erfindung, ist jedoch nicht möglich. Auch ist der US-A 5 071 338 eine Verwendung von thermo- und duroplastischen Materialien zusammen fremd.

Aus der US-A 4 270 964 ist eine weitere Form mit einem Positiv- und einem Negativformteil bekannt, mit der ein profilierter, schalenartiger Gegenstand mit Verstärkungselementen herstellbar war. Das Aufbringen eines Druckaufbaus war jedoch nicht möglich; es konnte nur evakuiert werden. Eine Verarbeitung von thermo- und duroplastischen Materialien zusammen mit den daraus resultierenden Vorteilen, wie oben erwähnt, war der US-A 4 270 964 ebenfalls fremd.

Die Ausgestaltung eines Formteiles mit bereichsweise elastischen Wänden verbindet die Vorteile einer einteiligen Negativ- und einer einteiligen Positivform mit denjenigen einer aus mehreren Teilen zusammengesetzten und auseinander bewegbaren Form; d. h. einer leichten Entformbarkeit. Ein weiterer, insbesondere preislicher Vorteil ergibt sich daraus, dass das Ensemble aus Positiv- und Negativformteil selbst als "Mini-Autoklav" verwendbar ist. Ein derartiger Aufbau ermöglicht eine große Gestaltungsvielfalt bei der Druck- und Temperaturbeaufschlagung. Zudem ist hier die Wärmekapazität und die Wärmeübergangszeit gegenüber einem Einbringen einer massiven Form in einen Autoklaven bedeutend geringer. Auch entfallen Transportwege vom Formbeschickungsarbeitsplatz zum Standort des in der Regel voluminösen Autoklaven.

Bisher wurden mit Tränkmaterialien getränkte Gewebe in oder auf eine Form gelegt, dann Wärme behandelt und anschließend die Ränder des derart gebildeten Gegenstands sauber geschnitten und/oder gefräst. Es wird nun hier ein anderer, Arbeitszeit reduzierender Weg beschritten. Das Schichtmaterial, welches bis in die später freien Randkantenbereiche des Gegenstand hineinreichen soll, wird bereits vor dem Einbringen in die Form in seinen Abmessungen entsprechend konfektioniert und sofern notwendig, auch bereits vorgeformt. Dieses bereits vorbehandelte Material (z.B. Gewebe), welches auch getränkt sein kann, wird dann derart eingelegt, dass seine Ränder auf einem Anstehabsatz eines der Formteile (Positiv- oder Negativformteil) aufstehen. Eine Nachbearbeitung nach dem Ausformen ist dann nicht mehr notwendig. Da getränktes Gewebe, insbesondere mit den nachfolgenden Verfahrensschritten, in Längsrichtung problemlos gestaucht und gezogen werden kann, kann die Konfektionierung mit einer großen Toleranz erfolgen.

In einer Ausführungsvariante werden in eine Gegenstandswand Zusatzelemente integriert Handelt es sich beispielsweise um eine Kofferschale so sind diese Zusatzelemente in die Gegenstandswand integrierbare Befestigungselemente für Schlösser, Eckenverstärkungen, Namensschildtaschen etc. Ist der Gegenstand z. B. eine Verschalung so könnten auch hier als Zusatzelemente Scharnierbefestigungen, Verstärkungen, Handgriffe, usw. vorgesehen werden. Zur Integration derartiger Zusatzelemente hat einer der Formteile, bevorzugt der Positivformteil für jedes Zusatzelement eine Positionierhilfe, in die bzw. auf die das betreffende Zusatzelement zur Ortspositionierung legbar ist. Es werden jedoch erst alle Schichtmaterialen auf den Formteil aufgelegt und dann erst jedes Zusatzelement in bzw. auf die betreffende Positionierhilfe gelegt. Das Zusatzelement wird sozusagen "ein- bzw. aufgeklebt". Die Form mit den beiden Formteilen wird erst nach dem Einbringen des bzw. der Zusatzelemente geschlossen und dann mit einem Druck- und Temperaturverlauf beaufschlagt.

Zur beispielsweisen Herstellung einer Kofferschale wird auf den Positivformteil ein Glasgewebe aufgelegt, welches mit einem nach dem Aushärten duroplastische Eigenschaften aufweisenden Tränkmittel getränkt ist. Anschließend wird eine vakuumdichte Haube aufgelegt und evakuiert. Hierdurch wird ein blasenfreier Zustand der späteren Gegenstandswand erreicht. Durch dieses Absaugen erfolgt gleichzeitig ein faltenfreies Anliegen des Schichtmaterials an der Oberfläche der Positivform.

In einem nächsten Verfahrensschritt wird die Form unter Entfernen der Haube geöffnet und als nächste Schicht eine Schaummatte als Gegenstandswandkernstoff wirkend aufgelegt. Die Schaummatte ist vorzugsweise geschlossenporig ausgebildet. Sie ist ein preisgünstiges und auch leichtes Material zur Verdickung der Gegenstandswand. Durch die nach den Aushärten stabile Glasgewebeschicht und die nachfolgend beschriebenen auf der Schaummatte aufliegenden stabilen Schichten, ergibt sich ein äusserst stabiler und verwindungssteifer schalenartiger Aufbau. Auch nach dem Auflegen der Schaummatte wird evakuiert.

Auf die Schaummatte wird dann ein mit einem nach dem Aushärten duroplastartigen wirkenden Tränkmittel getränkte Kohlefasergewebe (Carbongewebe) aufgelegt. Anschließend wird wieder evakuiert.

Auf das Kohlefasergewebe wird vorzugsweise eine Thermoplastfolie aufgelegt. Diese Thermoplastfolie ergibt einmal eine hohe Kratz- und Schlagfestigkeit und unterdrückt zudem Splitterbruch; andererseits fügt zu den guten duroplastischen Eigenschaften des Schichtenaufbaues die guten thermoplastischen Eigenschaften hinzu. Auch jetzt wird wieder evakuiert.

Mit dieser Thermoplastfolie kann ein beispielsweiser Aufbau einer Gegenstandswand bereits beendet sein und mit der nachfolgenden, unten beschriebenen Druck- und Temperaturverlaufsbeaufschlagung begonnen werden. Soll die Gegenstandswand jedoch farbig lackierbar sein, wird als weitere Schicht ein Vlies aufgebracht. Dieses Vlies ist mit einem Tränkmittel getränkt, welches nach dem Aushärten duroplastische Eigenschaften hat.

Damit jeweils eine Evakuierung der auf- bzw. eingelegten Schichten möglich ist, hat der Positivformteil eine umlaufende Dichtlippe mit nach innen versetzter Nut als Luftkanal, der mit einem Vakuumanschluss verbindbar ist.

Eine der beiden Formteile ist zudem innen mit einem Hohlraum versehen, in den ein Heiz- und/oder Kühlfluid einbringbar ist.

Wie bereits oben ausgeführt, ist einer der Formteile zum leichteren Ausformen bereichsweise elastisch verformbar ausgebildet. Diese sich bereichsweise ändernde Elastizität bzw. sich ändernde Steifigkeit der Formteilwand wird durch ein elastisches Formwandmaterial erreicht, in das Versteifungsteile eingelegt sind. Vorzugsweise wird man den Positivformteil versteifen, indem beispielsweise in die gerade oder nahezu geraden bzw. großflächigen Formwandteilbereiche Versteifungen eingelegt werden und die restlichen Bereiche insbesondere die Eckenbereiche unversteift bedingt elastisch blieben. Da der Formteil eine elastische Wand aufweist, erfolgt eine ausreichend gute Druckübertragung bei einer Druckbeaufschlagung.

Der in seinem Grundmaterial elastisch ausgebildete Formteil kann dann auf seiner Aussenseite (die Seite, auf der der Schichtenaufbau nicht liegt) mit einem Druckverlauf beaufschlagt werden. Die Druckbeaufschlagung wird vorteilhaft mit einem unter Druck stehenden Fluid vorgenommen.

Der an der zukünftigen Oberfläche des Gegenstands anliegende bzw. diesen formende Oberflächenbereich des Formteils beispielsweise des Negativformteils weist eine hohe Oberflächengüte auf und ist insbesondere aus Galvanonickel gefertigt. Selbstverständlich kann auch der ganze Formteil aus Galvanonickel bestehen. Auch kann die Form aus einem mit Duroplast getränkten Kohlefasergewebe bestehen. Ferner kann sie aus Metall, insbesondere Aluminium, hergestellt sein.

Um ein Festkleben der Gegenstandswände an der Oberfläche der Formteile zu vermeiden, ist auf diesen eine Selbstrennfolie aufgebracht, vorzugsweise aufvulkanisiert. Die Selbsttrennfolie ist in vorteilhafter Weise auf dem "elastischen" Positivformteil angeordnet.

### Kurze Beschreibung der Zeichnungen

Im Folgenden werden Beispiele des erfindungsgemäßen Verfahrens, der hierzu verwendbaren erfindungsgemäßen Form, eines Zusatzelementes sowie des mit dem Verfahren und der Form hergestellten erfindungsgemäßen Gegenstands anhand der nachfolgenden Zeichnungen näher erläutert. Weitere Vorteile der Erfindung ergeben sich aus dem Beschreibungstext. Es zeigen:
- Fig. 1: eine schematische Querschnittdarstellung eines Positivformteils der erfindungsgemäßen Form,
- Fig. 2: eine schematische Explosions-Querschnittdarstellung einer temperatur- und druckbeaufschlagbaren Form mit einem Negativ- und einem Positivformteil, der mit Schichtmaterial belegt ist,
- Fig. 3: eine in den **Figuren 1** und **2** dargestellten Positvformteil mit einem erfindungsgemäßen, in Explosionsdarstellung gezeigten Schichtenaufbau,
- Fig. 4: einen Querschnitt durch den Positivformteil mit einem aufgelegten Teitschichtenaufbau einer Gegenstandswand mit aufgelegter Haube zur Schichtenevakuierung,
- Fig. 5: einen Querschnitt durch eine Detailvergrößerung des Übergangs vom Randbereich eines Zusatzelements zum Schichtenaufbau der Gegenstandswand,
- Fig. 6: einem Querschnitt analog zu **Figur 2**, wobei jedoch hier Details der Druckplatte ausgeführt sind und die Positivform bereits in die Negativform eingelegt dargestellt ist und
- Fig. 7: einen Querschnitt durch eine Ausführungsvariante eines Negativformteils mit Führungselementen für ein unmittelbar im Formteil einen Temperaturverlauf erzeugendes Heiz- bzw. Kühlfluid.

### Wege zur Ausführung der Erfindung

Beim unten beschriebenen, erfindungsgemäßen Verfahren zur Herstellung eines profilierten Gegenstands **1** mit einer schalenartigen Gegenstandswand **3** wird eine Form **5** mit einem Positiv- und einem Negativformteil **7a** und **7b** verwendet.

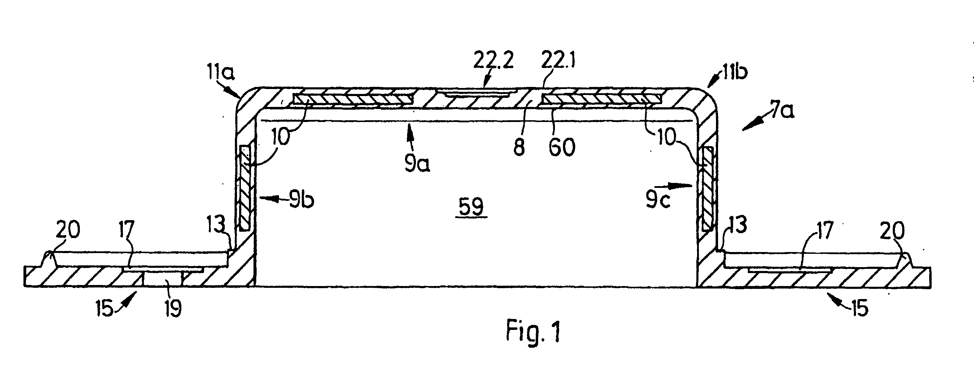

Der Positivformteil **7a,** wie er in den **Figuren 1, 2** und **4** im Querschnitt schematisch dargestellt ist, ist entsprechend der Innenform des herzustellenden Gegenstands 1 geformt. Der herzustellende Gegenstand 1 kann beispielsweise eine Kofferschale (Boden- oder Deckelteil), ein Handgriff, eine Abdeckung z. B. verwendbar in Fahrzeugen usw. sein. Der Positivformteil 7a ist aus einem bedingt eigensteifen, jedoch auch in vorgegebenen Bereichen elastischem Material hergestellt. Die Steifigkeit und Elastizität der Positivform ist örtlich veränderlich derart gewählt, dass das unten beschriebene Auflegen der verschiedenen Schichtmaterialien unter Beibehaltung einer vorgegebenen Form möglich ist und nach dem Aushärten der Positivformteil **7a** jedoch derart verformbar ist, dass sie vom hergestellten und ausgehärteten Gegenstand **1** entfernbar d.h. abziehbar ist.

Um diese Eigenschaften zu erreichen, besteht der Positivformteil **7a** beispielsweise aus Kautschuk (vorzugsweise aus Polyacrylnitrilkautschuk) als elastisches Grundmaterial **8.** In die geraden Formteilbereiche **9a** bis **9c** sind Versteifungselemente **10** eingelegt, d. h. integriert, während die Ecken **11a** und **11b** des Positivformteils **7a** zur Erleichterung der Ausformbarkeit unversteift gehalten sind. Die Versteifungselemente **10** können Metallplatten oder steife Kunststoffplatten sein, welche ein Kohlefasergewebe durchtränkt mit einem ausgehärteten Duroplast haben. Der Positivformteil **7a** hat ferner einen umlaufenden Anstehabsatz **13** der als "Anschlag", wie unten beschrieben, für einzulegendes Wandschichtmaterial dient. Dieser Anstehabsatz **13** ermöglich eine Herstellung von profilierten schalenartigen Gegenständen, deren Kanten ohne Bearbeitung eine ausgezeichnete Maßhaltigkeit und gutes Aussehen (beispielsweise keine Ausfransungen, keine scharfen Spitzen, ...) haben.

Der Positivformteil **7a** hat einen umlaufenden ebenen Abstellflansch **15.** Der Abstellflansch **15** dient, wie schon der Ausdruck sagt, als Abstellfläche für den Positivformteil **7a** während des Auflegens des Schichtmaterials und Einsetzen von Zusatzelementen **22.3.** Er hat auf seiner der Abstellfläche gegenüber liegenden Seite eine umlaufende Nut **17,** welche bei einem Zusammenbau mit dem Negativformteil **7b** bzw. einer elastischen Haube **42** als Luftkanal bei einem Evakuierungsprozess dient. Die Haube **42** ist während des Schichtaufbaus abnehmbar; sie wird nur für die jeweiligen Evakuierungsprozesse benötigt und ist nicht Teil des Schichtaufbaus der Gegenstandswand. In diese Nut **17** mündet ein Durchbruch **19** für einen Vakuumanschluss. Im freien Randbereich des Abstellflansches ist benachbart zur Nut **17** nach aussen versetzt, eine umlaufende Dichtlippe **20** angeformt.

Der Positivformteil **7a** hat ferner in seiner Aussenwandung **22.1** eine Ausnehmung 22.2 als Positionierhilfe in die hier beispielsweise ein Zusatzelement 22.3, wie unten beschrieben, einlegbar ist.

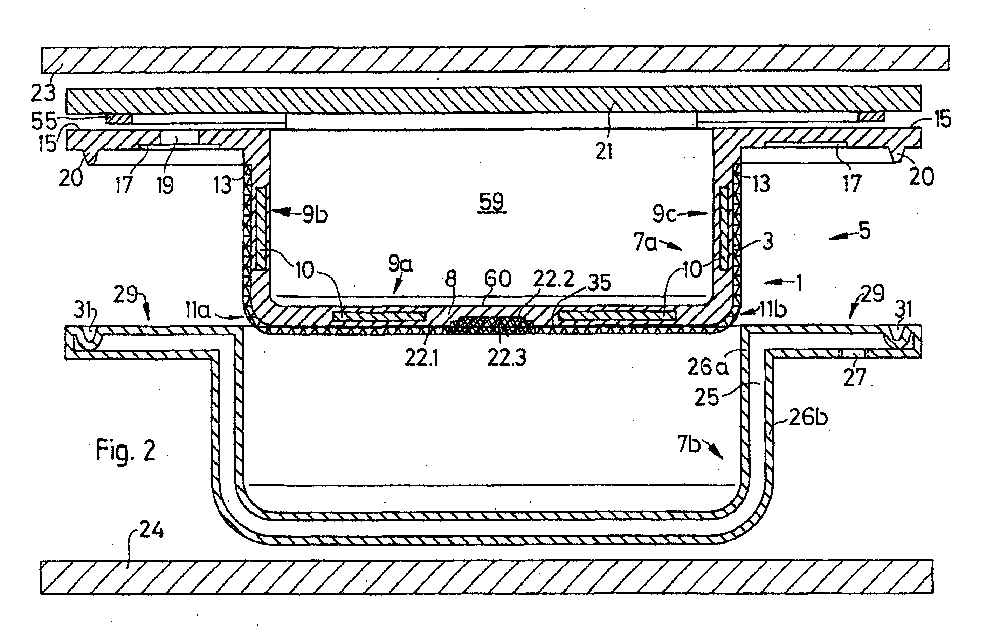

Der Negativformteil 7b ist in Figur 2 zusammen mit dem Positivformteil 7a dargestellt. **Figur 2** ist eine schemtische Explosions-Querschnittdarstellung, wobei hier die Form **5** temperatur- und druckbeaufschlagbar ist. Die Form **5** hat femer eine Druckplatte **21,** auf die eine Oberplatte **23** einer nicht dargestellten Presse gegen eine Unterplatte **24** dieser Presse wirkt. Der Negativformteil **7b** ist im Gegensatz zum Positivformteil **7a** starr und nicht elastisch verformbar ausgebildet. Er weist einen Innenraum **25** als Fluidführmittel auf, der von einer Innen- und einer Aussenwand **26a** und 26b umgeben ist. Der Innenraum 25 ist für ein einbringbares Kühl- bzw. Aufheizfluid durch einen Durchbruch 27 in der Aussenwand 26b zugänglich. Die Innen- und die Aussenwand 26a und 26b können entgegen der schematischen Darstellung in Figur 2 mit stabilisierenden (nicht dargestellten) Querstegen einander abstützend verbunden sein. Der Negativformteil **7b** stellt eine passende Negativform zum Positivformteil **7a** dar; er hat jedoch kein zum Anstehabsatz **13** analog angeformtes Element. Er hat jedoch einen zum Abstellflansch **15** passenden Flansch **29,** der eine zur Dichtlippe **20** passende umlaufende Dichtnut **31** in der Innenwand **26a** aufweist. Ein Ineinanderstekken von Positivformteil **7a** in den Negativformteil **7b** ist bei auf dem Positivformteil **7a** aufgelegten, noch nicht ausgehärteten Gegenstandsmaterial mit einer Spielpassung möglich.

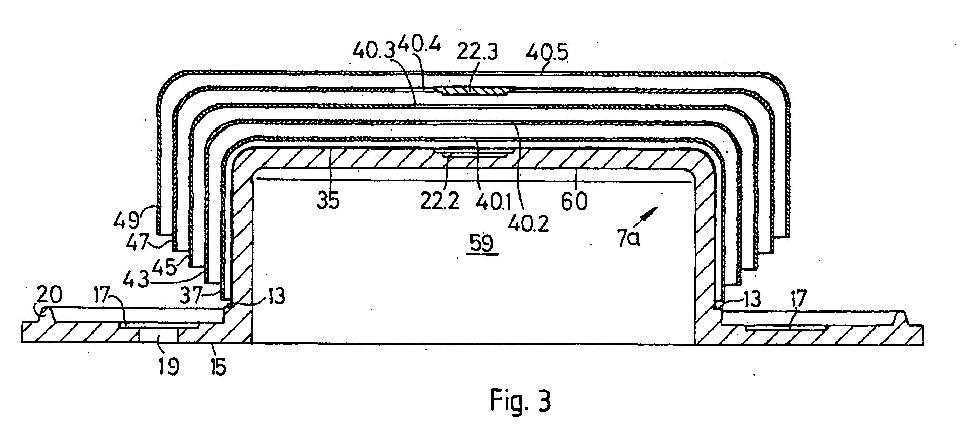

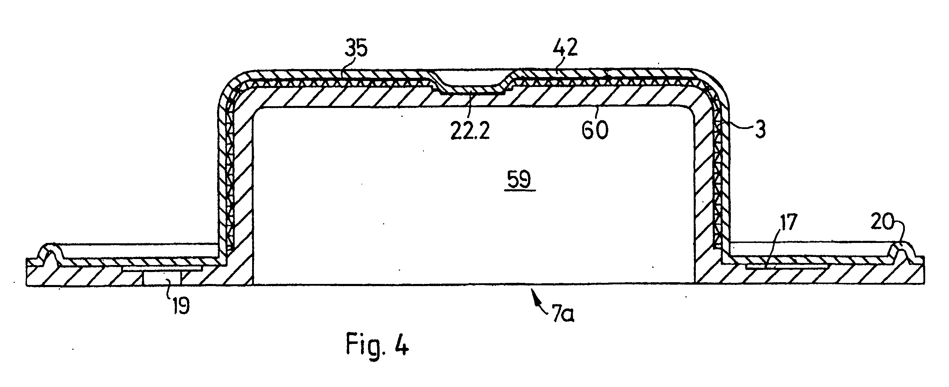

Eine beispielsweise Herstellung eines Schichtenaufbaus der Gegenstandswand 3 des profilierten schalenartigen Gegenstands 1 wird anhand der beiden Figuren **3** und **4** erläutert. Um ein Ankleben des Schichtenmaterials an der Oberfläche des Positivformteils **7a** zu vermeiden, ist auf diese eine Selbsttrennfolie **35** aufgebracht, vorzugsweise aufvulkanisiert (andere Verfahren zum Aufbringen einer derartigen Folie bzw. Schicht sind möglich, wie beispielsweise lackieren oder nur ankleben). Diese Selbsttrennfolie 35 ist nicht Bestandteil der herzustellenden Gegenstandswand. Auf die Selbsttrennfolie 35 wird nun ein in seinen Abmessungen konfektioniertes Glasgewebe 37 aufgelegt. Das Glasgewebe 37 ist mit einem Tränkmittel getränkt, welches im ausgehärteten Zustand ein Duroplast ist. Vorzugsweise wird man als Tränkmittel ein (gemäss speziellen Anforderungen gemischtes) Epoxydharz nehmen; andere Flüssigkeiten bzw. pastöse Tränkmittel sind möglich. Das Glasgewebe **37** ist derart konfektioniert, dass es in seinen Abmessungen passend auf den Positivteil 7a derart auflegbar ist, dass sein Aussenrand **37** auf dem Anstehabsatz **13** ansteht. Sofern Zusatzelemente **22.3** verwendet werden sollen, hat das Glasgewebe **37** gemäß deren Anzahl und Lage entsprechend positionierte Löcher, wobei der Lochrand mit dem Rand der betreffenden Ausnehmung **22.2** übereinstimmt; der Einfachheit halber ist nur eine einzige Ausnehmung **22.2** und ein Loch **40.1** bis **40.5** in den Schichtmaterialien **37, 43, 45, 47** und **49** für nur ein einziges Zusatzelement **22.3** dargestellt. Es können aber beliebig viele Zusatzelemente **22.3** bzw. Löcher an beliebigen Stellen vorhanden sein.

Anstelle des Glasgewebes 37 kann auch ein Polyestergewebe oder ein Kohlefasergewebe mit Tränkmittel verwendet werden. Die Kohlefaser ist leicht und bringt eine hohe Steifigkeit mit einer hohen Formstabilität, ist aber teuer. Ein Glasfasergewebe ist billig aber schwer. Ein Polyestergewebe ist billig und leicht, aber nicht so steif wie die anderen Gewebe.

Ist das mit dem Tränkmittel versehene und entsprechend den Gegenstandsabmessungen zugeschnittene Glasgewebe **37** (beispielsweise ein sogenanntes Glasfaser-Prepreg mit duromerer Matrix) auf den Positivformteil **7a** aufgelegt, wird es mit einer elastischen Haube 42 bedeckt, welche dichtend über die Dichtlippe 20 greift. Die Haube **42** soll sich gut anschmiegen können, jedoch nicht festkleben. Als Haubenmaterial sind Elastomere verwendbar. Gute Erfahrungen sind mit Silikonmaterial erreicht worden. Der exakte Zuschnitt des Glasgewebes **37** kann beispielsweise mit einer CNC-gesteuerten Zuschnitteinrichtung erfolgen. Über den Vakuumanschluss 19 wird nun auf einen Unterdruck von mindestens auf 0,8 bar, vorzugsweise jedoch auf 0,1 bar abgepumpt. Hierdurch werden im Glasgewebe 37 enthaltene und beim Auflegen eingebrachte Gase insbesondere Luft abgesaugt und eine gute, satte Auflage erreicht. Auch werden auf der Selbsttrennfolie 35 vorhandene Luftbläschen abgesaugt. Das Glasgewebe 37 liegt nun blasen- und faltenfrei auf der Positivformteil 7a auf.

In einem nächsten Verfahrensschritt wird als Gegenstandswandkemstoff eine PVC-Schaummatte **43** aufgelegt, welche analog zum Glasgewebe **37** konfektioniert und vorgeformt ist. Es können anstelle einer PVC-Schaummatte auch andere Schaummatten, insbesondere FCKW-freie verwendet werden. D. h. die Schaummatte **43** hat eine dreidimensionale Form entsprechend dem Gegenstandsprofil. Anschließend erfolgt das bereits für das Glasgewebe beschriebene Evakuieren unter Verwendung der elastischen Haube **42.** Die PVC-Schaummatte **43** ist bevorzugt geschlossenporig ausgebildet. Hierdurch wird vermieden, dass Feuchtigkeit oder Gase bzw. Flüssigkeiten aus der Umgebung langfristig eindiffundieren könnten.

Auf die "evakuierte" PVC-Schaummatte **43** wird nachfolgend ein ebenfalls konfektioniertes mit einem "duroplastischen" Tränkmittel getränktes Kohlefasergewebe **45** aufgelegt, welches dann ebenfalls "evakuiert" wird. Eine dreidimensionale Formgebung vor dem Auflegen ist nicht notwendig. Als "duroplastisches" Tränkmittel wird man bevorzugt Epoxydharz verwenden.

Auf das Kohlefasergewebe **45** kommt eine thermoplastische Folie **47** (= Folie aus einem thermoplastischen Material), welche ebenfalls auf Endmass konfektioniert und entsprechend dem Profil des Positivformteils **7a** tiefgezogen ist. Auch hier wird zur Vermeidung von eingeschlossenen Bläschen und Falten, wie bereits oben beschrieben, unter Verwendung der Haube **42**, evakuiert. Durch eine Integration dieser thermoplastische Folie **47** in einem Schichtenaufbau der Gegenstandswand **3** mit nach dem Aushärten duroplastischen Materialien, hier des Tränkmittels des Glasfasergewebes **37,** ergibt sich eine Vereinigung der duroplastischen und der thermoplastischen Materialvorteile. Die hohe Formstabilität des Duroplastes bleibt erhalten, seine Splitterneigung hingegen wird durch die thermoplastische Folie **47** eliminiert. Ein weiterer Vorteil der thermoplastischen Folie **47** ist, sofern sie die oberste Aussenschicht bildet, dass ein Verkratzen stark reduziert wird und sofern es dennoch einmal zu einem Kratzer kommt, erscheint dieser nicht mehr als heller Strich; mit der Folie **47** hebt er sich nicht mehr vom Erscheinungsbild des Gewebes **45** ab. Dieses Verhalten ergibt bei einem als Kofferschale (Boden- und/oder Deckelteil) ausgebildeten Gegenstand einen großen ästhetischen Vorteil; der Koffer sieht immer wie neu aus.

Sollen Gegenstandswände hergestellt werden, bei denen das dekorative Erscheinungsbilde des Kohlefasergewebes sichtbar bleiben soll, wird auf die unten beschriebenen weitere Schicht verzichtet.

Wird jedoch eine Lackier- oder Beschriftbarkeit gewünscht, so wird in einer besonderen Ausführungsform eine weitere vließartige Aussenschicht **49** hinzugefügt. Diese Schicht **49** ist ebenfalls mit einem duroplastartigen Tränkmittel getränkt. Sie sollte zudem bei durch Strahlungseinfall erreichbaren Temperaturen von 90°C bis 120°C nicht erweichen und auf keinem Fall klebrig werden. Als Schichtmaterial würde man vorzugsweise die Dexter SynSkin HC 9837.1 der Firma Dexter Corp. verwenden. Diese Schicht widersteht (="Gel time") Temperaturen von 121°C zwanzig bis fünfundreissig Minuten und 177°C 0,5 bis 2 Minuten. Es ist nämlich davon auszugehen, dass eine dunkle Oberfläche bei Sonnenbestrahlung 95 bis 110°C erreichen kann. Um die Haftfähigkeit eines Lackes zu erhöhen, kann die Oberfläche der Aussenschicht **49** mit einem "einhundertfünfziger" Sandstrahl leicht aufgerauht werden. Das abgeriebene Material wird dann mit einem sog. "Static Conditioner" entfernt.

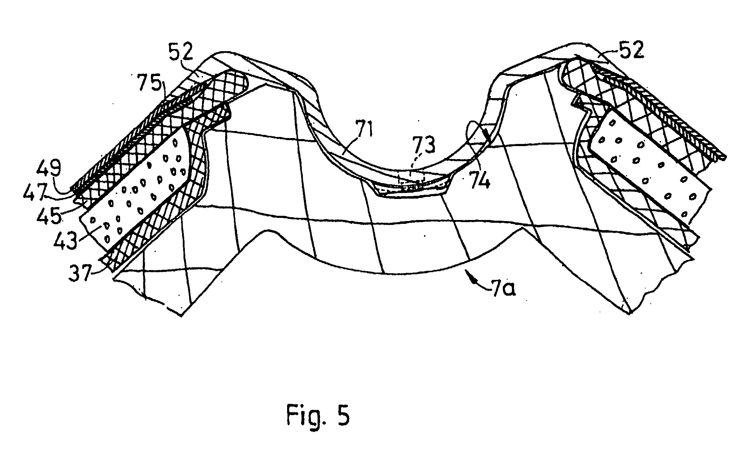

Nachdem sämtliche Schichten des Schichtaufbaus der Gegenstandswand 3 aufeinandergelegt und "evakuiert" sind, wird je nach der Anzahl vorhandenen Ausnehmungen **22.2** ein oder mehrere Zusatzelemente **22.3** in die betreffende Ausnehmung **22.2** eingelegt. Jedes Zusatzelement **22.3** hat eine Randverjüngung **52,** welche kontinuierlich vom dicken zum dünnen Bereich ausgebildet sein kann, wie in **Figur 5** dargestellt ist. Es kann aber auch ein stufenartiger Übergang, wie in den **Figuren 1** bis **4** angedeutet, vorhanden sein. Wichtig ist lediglich, dass beim in die Gegenstandswand **3** integrierten Zustand ein möglichst kontinuierlicher Kraftlinienverlauf vom Wandmaterial auf das Zusatzelement **22.3** möglich ist, um eine Langzeitstabiltät zu geben. Es soll auf jeden Fall eine spätere Trennung bzw. Spaltbildung zwischen Zusatzelement **22.3** und Wand **3** (Lochrand) vermieden werden. **Figur 5** zeigt lediglich schematisch die Verbindung der einzelnen Wandschichten zum Zusatzelement **22.3.** Der Lochrand der jeweiligen Schichten wird derart gewählt, dass der oben erwähnte Kraftlinienübergang gegeben ist und sich ein ebener Übergang des Schichtenaufbaus ohne Wulstbildung nach aussen zum Zusatzelement **22.2** ergibt.

**Figur 5** zeigt als beispielsweises Zusatzelement **22.3** eine Eckverstärkung **71,** wie man sie in einer verbesserten Ausführungsform in die "ausgehöhlten" Ecken des in der EP-A 0 914 784 beschriebenen Koffers einsetzen könnte. Die hier gezeigte Eckverstärkung **71** dient nicht nur zur Wandverstärkung; sie weist auch Befestigungselemente (hier ein Durchbruchsgewinde **73**) auf, welche hier zum Anschrauben eines (nicht dargestellten) Zylinderschlosses dienen. Die Eckverstärkung **71** ist hier aus einem Polycarbonat (Thermoplast) hergestellt; es kann aber auch ein mit einem Duroplast getränktes Kohlefasergewebe (Gewichtsersparnis) verwendet werden. Eine zur Ausnehmung **22.2** analoge Ausnehmung **74** zeigt **Figur 5.** Die Seitenteile **52** der Wandverstärkung entsprechend der gewünschten kontinuierlichen Kraftlinienübertragung. Die Seitenwände laufen beispielsweise unter einem Winkel von etwa 15° spitz zu. Die "Spitze" **75** geht auf einen Halbkreisbogen mit einem Durchmesser von 0,5 mm zu. Bei dem hier angerissenen "Kofferbeispiel" ist die Wanddicke der Eckverstärkung 71 3 mm.

Die Zusatzelemente **22.3** in der Gegenstandswand **3** eines Gegenstands **1** müssen nicht alle aus demselben Material bestehen. Das Material wird der speziellen Auf-gabe angepasst. Das Zusatzelement **22.3** kann aus einem thermo- oder duroplastischen oder einem metallischen Material bestehen. Auch können geschichtete sowie Verbundmaterialien verwendet werden. Die Zusatzelemente 22.3 dienen einmal dazu an bestimmten Stellen der Gegenstandswand eine komplizierte Formgebung zu ermöglichen, welche mit dem Positivformteil nicht oder nur aufwendig herzustellen wäre. Auch können Zusatzelemente 22.3 als Wandversteifungen dienen; sie können aber auch Verbund- oder sonstige Einheiten, wie Befestigungselemente, Schloss- Scharnier-, Griff-, Kennzeichnungsteile usw. bilden.

Sind alle Schichten mit den Zusatzelementen **22.3,** sofern diese benötigt werden, aufgelegt und "evakuiert" worden, wird der Positivformteil um 180° gedreht und in den Negativformteil **7b** gelegt. Positiv- und Negativformteil **7a** und **7b** sind zwar aufgrund der in der Dichtnut **31** liegenden umlaufenden Dichtlippe **20** vakuumdicht miteinander verbunden; der Zwischenraum zwischen den beiden Formteilen **7a** und **7b** ist jedoch über die umlaufende Nut **17** und den in diese einmündenden Durchbruch **19** fluidmäßig zugänglich. Der Negativformteil **7b** liegt auf der Unterplatte **24** einer Presse auf. Die Druckplatte **21** der Presse liegt auf dem Abstellflansch **15** des Positivformteils **7a** über eine umlaufende Dichtlippe **55** abgedichtet dicht auf. Die Dichtlippe **55** ist hier an der Druckplatte **21** angeordnet, sie kann aber auch auf dem Abstellflansch **15** angeordnet sein. Die Druckplatte **21** hat einen Justageabsatz **57,** der eine räumliche Zuordnung von Druckplatte **21** und Positivformteil **7a** ergibt. Auf die Druckplatte **21** wirkt die Oberplatte **23** der Presse.

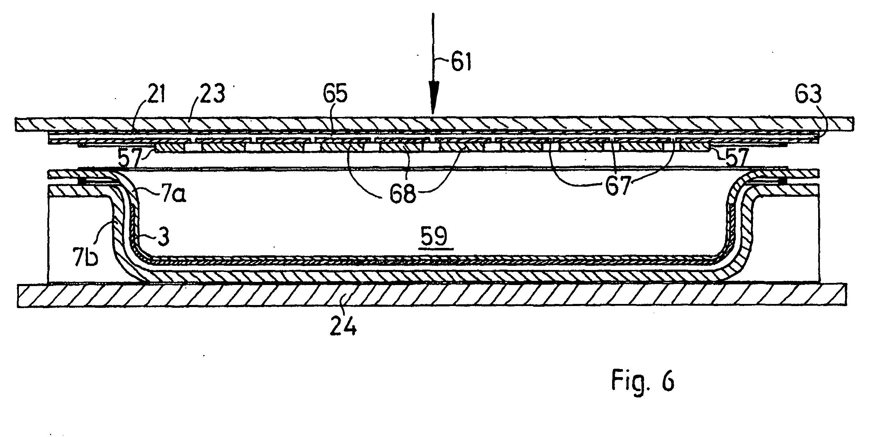

Figur **6** zeigt den Positivformteil **7a** eingelegt in den Negativformteil **7b**. Der Negativformteil **7b** liegt auf der Druckplatte **21**. Die Oberplatte **23** zusammen mit der Druckplatte **21** werden in Pressdruckrichtung **61** auf die Unterseite des Positivformteils **7b** deren Freiraum **59** abdichtend zubewegt. Die Druckplatte **21** hat ein System zur Druckbeaufschlagung des Freiraums **59**. Das Druckbeaufschlagungssystem hat einen Anschluß **63** für ein Druckfluid sowie daran angeschlossene Fluidleitungen **65** mit mehreren Fluidauslässen **67**, welche durch Zwischenelemente **68** voneinander getrennt sind. Das in den Freiraum **59** einbringbare Fluid ist heizbar und kann mit Druck beaufschlagt werden.

Der Innenraum **25** der Negativform **7b** ist mit einem heizbaren Fluid beaufschlagbar, d.h. durchströmbar. Die Temperatur und der Fluss des Heizfluids sowie des heizbaren Druckfluids sind derart gewählt, dass Positiv- und Negativformteil **7a** und **7b** mit dem Schichtenaufbau in etwa fünfzehn Minuten auf 60°C bis 140°C bevorzugt auf etwa 120°C annähernd kontinuierlichen aufgeheizt werden, anschliessend wird die erreichte Temperatur etwa fünfzehn Minuten konstant gehalten und dann wieder durch Einleiten eines Kühlfluids oder gekühlten Fluids auf Raumtemperatur abgekühlt. Zum Temperaturverlauf parallel verlaufend, erfolgt eine Druckbeaufschlagung mit einer kontinulierlichen Rampe auf 2 bis 6 bar, bevorzugt auf etwa 3 bar mit einem fünfzehnminütigen Platteau und einem anschließenden Druckabbau. Die verwendeten Drücke und Temperaturen bzw. deren Verläufe richten sich nach den im Schichtenaufbau verwendeten Materialien.

Zum Druckaufbau wird der Innenraum **59** durch nicht dargestellte Einlassöffnungen mit einem Druckfluid beaufschlagt. Da die Positivform elastische Bereiche aufweist, ist ein guter Druckübergang auf das Schichtmaterial gegeben.

Nach dem Druckabbau und Erreichen der Umgebungstemperatur werden Oberund Unterplatte **23** und **24** auseinander gefahren sowie der Positivformteil **7a** mit dem aufliegenden, nun ausgehärteten Gegenstandswand **3** aus dem Negativformteil **7b** herausgenommen. Anschließend wird der Positivformteil **7a** vom Gegenstand **1** unter elastischem Verformen abgezogen.

Anstatt nach dem Auflegen jeweils einer Schicht den Wandaufbau zu evakuieren, kann auch erst nach Auflage der letzten, obersten Schicht vor derTemperaturund Druckbeaufschlagung der gesamte Schichtenaufbau evakuiert werden. Einen besonders guten blasen- und faltenfreieren Aufbau erhält man jedoch mit einem Evakuieren bei jeder aufgebrachten Schicht.
Die Schichtmaterialien müssen nicht einstückig sein. Es können auch mehrere Stücke pro Schicht verwendet werden. Es kann dann jedoch vorkommen, dass sich kleine Unebenheiten in der Oberfläche nach dem Aushärten ergeben können. Dies kann jedoch durch die richtige Auswahl des bzw. der Tränkungsmittel reduziert bzw. unterbunden werden. Das Tränkungsmittel kann nämlich derart gewählt werden, dass es in den Spalt zwischen den Materialien gleicher Schicht hineinläuft bzw. -kriecht und diesen ausreichend ausfüllt. Es können pro Schicht auch unterschiedliche Materialien bzw. Gewebe verwendet werden, um beispielsweise auf diese Art bereits versteifte oder bevorzugt elastische Bereiche zu erzeugen. Auch kann hierdurch, sofern die herzustellende Gegenstandswand nicht zu kleine Radien haben soll, auf eine Vorprägung verzichtet werden.

Anstelle die Schichten auf den Positivformteil zu legen, können sie auch in den Negativformteil eingelegt werden. Vorzugsweise wird man dann jedoch den Negativformteil derart ausbilden, dass er wie der ursprüngliche Positivformteil von der ausgehärteten Gegenstandswand abgezogenen werden kann; d. h. man wird ihn wenigstens teilweise elastisch ausbilden. Den neuen Positivformteil wird man dann mit einem Wandinnenraum kühl- und erwärmbar sowie seine Oberfläche hochpoliert für eine gute Oberflächenqualität der herzustellenden Wand ausbilden. Den Anstehabsatz für die Bildung des Gegenstandsrandes wird man dann vorzugsweise auch in der Negativform ausbilden. Einen derartigen Aufbau wird man vorzugsweise dann wählen, wenn schalenartige Gegenstände mit einer konkaven Oberfläche hoher Güte gewünscht werden.

Anstatt die Positionierhilfe als Ausnehmung **22.2** auszubilden, kann sie auch als erhaltener An- bzw. Aufsatz ausgebildet sein. Das betreffende Zusatzelement wird dann einfach aufgesteckt.

Der Negativformteil **7b** kann anstatt aus Galvanonickel auch aus Kohlefaser mit einem ausgehärteten Tränkmittel bestehen. Es kann als Formmaterial auch Aluminium verwendet werden; Stahl ginge zwar auch, ist aber zu teuer. Die Oberflächengüte der Negativform **7b** kann man nun derart wählen, dass hoch polierte Oberflächen nach dem Ausformen entstehen. Man kann aber auch lediglich eine glatte oder auch strukturierte Oberfläche erzeugen.

Anstatt ein geheiztes oder gekühltes Fluid in den Freiraum **59** zum Heizen oder Kühlen des Formteils **7b** einzubringen, können Heiz- bzw. Kühlelemente (Heizstrahler, Kühl- bzw. Heizschlangen, Peltierelement, ...) an den bzw. in die Zwischenelemente(n) **68** an- oder eingebracht werden.

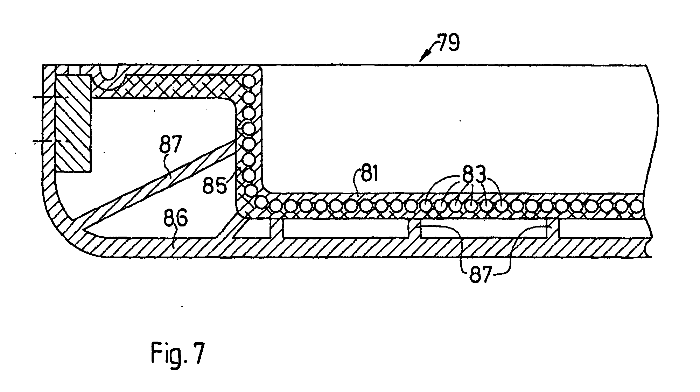

**Figur 7** zeigt eine weitere Ausführungsvariante eines mit einem Temperaturverlauf beaufschlagbaren Negativformteils **79**. Im Gegensatz zum Negativformteil **7b** hat der Negativformteil **79** als Fluidführmittel keine doppelschalige Wand, in deren Innenraum **25** das Heiz- bzw. Kühlfluid fliesst. Der Negativformteil **79** hat ein Formelement **81,** welches durch galvanisches Abscheiden von Nickel auf einem "Kupfermaster" erzeugt wird. Der Kupfermaster wird vorzugsweise durch Funkenerosion hergestellt; seine Oberflächenkontur entspricht derjenigen der herzustellenden Gegenstandswand. Nach Erzeugung einer handhabbaren Nickelschichtdicke mit ausreichender Stabilität für die nachfolgenden Verarbeitungsschritte werden auf der Rückseite der Nickelschicht Heiz- und/oder Kühlleitungen **83** für ein temperierendes Fluid angeordnet, welche mit einer Schicht **85** von mit Harz getränktem Aluminiumgranulat zur Stablitätserhöhung überdeckt werden. Dieses Gebilde, bestehend aus dem Formelement **81,** der Leitungsanordnung **83** und dem mit Harz getränkten Aluminiumgranulat **85** wird in einem Autokaven ausgehärtet. Das derart erzeugte Gebilde wird in ein Gussgehäuse **86,** welches eine Rippenkonstruktion **87** zum Tragen und Versteifen aufweist, eingeklebt.

Die Figuren und die Beschreibung befassen sich mit der Herstellung einer Kofferschale als Anwendungsbeispiel der erfindungsgemässen Form. Neben der Kofferschale können jedoch, wie bereits eingangs erwähnt, auch andere schalenartige Teile, welche vorzugsweise in die Schalenwand integrierte Elemente aufweisen können, hergestellt werden. Derartige schalenartige Teile (Werkstücke) werden beispielsweise in der Fahrzeugindustrie benötigt. Gegenüber herkömmlichen aufwendigen Verfahren lassen sich z.B. die nachfolgenden, lediglich eine Auswahl darstellenden Teile herstellen:
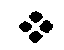 Frontend mit Kühler, Lampen und Stossstangen;
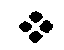 Heckend mit Batterieaufnahme und Bumper;
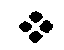 Innenseite für Kotflügel mit Federdomaufnahmen;
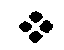 Motorrahmen mit Blechverstärkung;
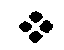 B-Säulen; Dachkonstruktionen;
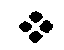 Unterboden/Aufschlagschutz;
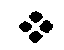 Cockpitstrukturen mit Frontwand und Pedalmodul;
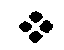 Mittelkonsolen mit Schaltung, Handbremse und Lüftungssystemen;
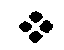 Sitzschalen mit akiven Sicherheitselementen;
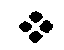 Ausfahrbare Sicherheitselemente bei Cabrios;
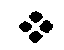 Dekorelemente mit High-Tech-Design

Durch die ebenfalls eingangs geschilderten, hervorragenden Eigenschaften des oben beschriebenen Wandmaterials kann eine vollkommen neue konstruktive Ausführung z.B. von Fahrzeugtürfüllungen erreicht werden. Diese neuen Türfüllungen können z.B. durch die Verwendung des integrierten Gewebes auch Zug aufnehmen. Auf einfache, oben geschilderte Art und Weise können Zusatzelemente in die Wand integriert werden. Die Türfüllungen können in ihrem Schichtenaufbau dann eine Vielzahl von Zusatzelementen, wie Kunststoffteile, Metallteile, elektrische Kabel und/oder Dekorfolien aufweisen.

Bei Fahrzeugen lässt im Augenblick der seitliche Aufprallschutz für Fahrzeuginsassen zu wünschen übrig. Bekannte Türverkleidungen werden jetzt nur auf der Türinnenseite "eingehängt". Hier schafft eine gemäss obigen Vorgaben hergestellte Türfüllung Abhilfe, da sie Zugkräfte aufnehmen kann, wenn man sie mit dem Türrahmen verkrallt anbringt. Bei einem seitlichen Aufprall wirkt die Türinnenverkleidung dann wie ein gespanntes Seil. Neben einer bisher nicht bekannten Zugbelastbarkeit ist eine mit einer derartigen Innenverkleidung versehene Türe schnell montierbar, hat ein geringeres Gewicht und stellt zudem einen besseren Klangkörper beim Einbau von Lautsprechern dar.

## Patentansprüche

1. Verfahren zur Herstellung eines profilierten Gegenstands **(1),** insbesondere eines Behälterteils, mit einer schalenartigen Gegenstandswand **(3),** zu dessen Formgebung ein Positiv- und ein Negativformteil **(7a, 7b; 79)** verwendet werden, **dadurch gekennzeichnet, dass** in bzw. auf einen der Formteile (**7a, 7b; 79**) als Wandmaterial wenigstens ein mit einem duroplastisch aushärtenden Tränkmaterial getränktes, gewebeartiges erstes Schichtmaterial und ein thermoplastische Eigenschaften aufweisendes zweites Schichtmaterial (**47**) gelegt, ein Aushärtevorgang initiiert und zum Entnehmen der wenigstens teilweise ausgehärteten, die Schichtmaterialien aufweisenden Gegenstandswand (**3**) wenigstens einer der Formteile (**7a**) unter bereichsweiser elastischer Verformung abgezogen wird.

2. Verfahren nach Anspruch 1, **dadurch gekennzeichnet, dass** auf wenigstens einen Formteil **(7a)** ein eine Unter- sowie eine Überdruckbeaufschlagung beinhaltender Druckverlauf aufgebracht wird, wobei nach dem Ein- bzw. Auflegen vorzugsweise jeder Schicht **(37, 43, 45, 47, 49)** auf bzw. in einen der Formteile **(7a)** dieser mit einer elastischen Haube **(42)** unterdruckdicht abgedeckt und eine Evakuierung der Schicht bzw. Schichten **(37, 43, 45, 47, 49)** bei einem Unterdruck kleiner 0,8 bar vorzugsweise unter 0,1 bar erfolgt, um einen blasen- und/oder faltenfreien Zustand der Gegenstandswand mit mehreren Schichtmaterialien zu erreichen, und zum wenigstens teilweisen Aushärten vorzugsweise nur einer der Formteile **(7b; 79)** mit einem Temperaturverlauf beaufschlagt wird, um die Verwendung eines Autoklaven zu eliminieren und vorzugsweise Wärmekapazität und Wärmeübergangszeit zu verringern.

3. Verfahren nach Anspruch 1 oder 2, **dadurch gekennzeichnet, dass** das zweite Schichtmaterial eine thermoplastische Eigenschaften aufweisende Folie ist, welche derart angeordnet wird, dass sie im Aussenbereich des Wandmaterials zu liegen kommt, um die Kratzfestigkeit der Gegenstandsaussenseite zu erhöhen und einen Splitterbruch zu verhindern.

4. Verfahren nach einem der Ansprüche 1 bis 3, **dadurch gekennzeichnet, dass** wenigstens ein Zusatzelement **(22.3; 71)** in wenigstens einem der Formteile **(7a)** zur Gegenstandswandverstärkung bzw. Verankerung mechanischer und/oder elektrischer Zusatzfunktionen in der Gegenstandswand positioniert wird.

5. Verfahren nach einem der Ansprüche 1 bis 4, **dadurch gekennzeichnet, dass** für die Gegenstandswand (3) mehrere übereinander zu legende, derart vorkonfektionierte und vorzugsweise derart vorgeformte Schichtmaterialien (37, 43, 45, 47, **49)** verwendet werden, dass sie randseitig fluchtend und anschlagend ausrichtbar sind, um später auf eine Kantennachbearbeitung des Gegenstands **(1)** verzichten zu können.

6. Verfahren nach einem der Ansprüche bis 5, **dadurch gekennzeichnet, dass** auf den Positivformteil **(7a)** ein Glasgewebe **(37),** getränkt mit einem Duroplast bildenden ersten Tränkmittel als erstes Schichtmaterial u.a. zur Erhöhung einer Durchstichfestigkeit aufgelegt wird, anschließend als Gegenstandswandkernwerkstoff eine Schaummatte **(43),** dann ein Kohlefasergewebe **(45),** getränkt mit einem Duroplast bildenden zweiten Tränkmittel als weiteres erstes Schichtmaterial zur Erzeugung einer hohen Festigkeit, in einem folgenden Verfahrensschritt das thermoplastische Eigenschaften aufweisende Schichtmaterial (47) und vorzugsweise als letzte Schicht ein Vlies **(49),** getränkt mit einem Duroplast bildenden dritten Tränkmittel aufgelegt wird, damit eine Oberflächenlackierung aufbringbar ist, und insbesondere erst nach der letzten Schicht (47 oder 49) die vorgefertigten Zusatzelemente **(22.3)** positioniert werden.

7. Form **(5)** mit einem Positiv- und einem Negativformteil **(7a, 7b; 79)** zur Herstellung eines profilierten, schaltenartigen Gegenstands **(1)** mit wenigstens einem Schichtmaterial **(37, 43, 45, 47, 49)** nach dem Verfahren gemäss Anspruch 2, **dadurch gekennzeichnet, dass** die Formteile (**7a, 7b; 79**) unter Einlagerung des Schichtmaterials **(37, 43, 45, 47, 49)** vorzugsweise mit einer Spielpassung zusammenbringbar sind, und ein erster **(7a)** der beiden Formteile **(7a, 7b; 79)** bereichsweise elastisch verformbar ausgebildet ist, um vom ausgehärteten Gegenstand **(1)** abziehbar zu sein, der erste Formteil **(7a)** Anschlussmittel **(19)** für eine Unter- sowie eine Überdruckbeaufschlagung hat und der zweite Formteil **(7b; 79)** zweite Anschlussmittel **(27)** und ein Fluidführmittel **(25; 83)** hat, die zweiten Anschlussmittel **(27)** mit dem Fluidführmittel **(25; 83)** in Verbindung stehen, um durch Einbringen eines Heiz- und/oder Kühlfluids eine Temperaturbeaufschlagung des zweiten Formteils (7b; 79) selbst vorzunehmen.

8. Form (5) nach Anspruch 7, **dadurch gekennzeichnet, dass** einer der Formteile **(7a, 7b; 79),** insbesondere der Positivformteil **(7a),** einen umlaufenden Anstehabsatz **(13)** hat, der einen Abschluss für jedes einzulegende Schichtmaterial **(37, 43,** 45, 47, 49) bildet, damit nach einem Ausformen eine Bearbeitung der Randkante des Gegenstands (1) nicht erforderlich ist.

9. Form (5) nach Anspruch 7 oder 8, **dadurch gekennzeichnet, dass** einer der Formteile (7a, 7b; 79), insbesondere der Positivformteil (7a), wenigstens eine Positionierhilfe (22.2; 74) mit vorzugsweise einer umlaufenden Randdickenverjüngung, insbesondere mit einer Abstufung, hat, in bzw. auf die in die Gegenstandswand **(3)** integrierbare, vorgefertigte Zusatzelemente **(22.3; 71),** welche insbesondere eine Randverjüngung aufweisen, derart einlegbar sind, dass eine integrierende Verbindung mit dem Schichtmaterial **(37, 43, 45, 47, 49)** insbesondere einer guten Kraftlinienübertragung durch die Randverjüngung zusammen mit der Abstufung erfolgt.

10. Form **(5)** nach einem der Ansprüche 7 bis 9, **dadurch gekennzeichnet, dass** einer der Formteile **(7a, 7b),** insbesondere der als zweiter Formteil ausgebildete Negativteil **(7b)** doppelwandig mit einem Wandinnenraum **(25)** ausgebildet ist, in den ein Fluid zur Formteilerwärmung und/oder -kühlung einbringbar ist, und vorzugsweise das Material des Formteils (**7b**) den thermischen Ausdehnungseigenschaften des Gegenstandmaterials angepasst ist, vor allem aus Galvanonickel besteht und eine ausreichende Oberflächengüte hat, mit der dann eine ausreichende Oberflächengüte der Gegenstandswand **(3)** erzeugbar ist.

11. Form nach einem der Ansprüche 7 bis 10, **dadurch gekennzeichnet, dass** auf der profilbestimmenden Oberfläche eines der Formteile, insbesondere des als ersten Formteil ausgebildeten Positivformteils (**7a**) eine Selbsttrennfolie (**35**) aufgebracht; vorzugsweise aufvulkanisiert ist und vorzugsweise einer der Formteile (**7a, 7b; 79**), insbesondere der Positivformteil **(7a),** örtlich unterschiedliche Steifigkeit und Elastizität aufweist, wobei vorzugsweise gerade Formteilbereiche **(9a - 9c)** steif, insbesondere durch Einlagematerial **(10)** in ein elastisches Grundmaterial **(8)** und Ekkenbereiche **(11a, 11b)** elastisch verformbar, infolge vorzugsweise aus nicht bewehrten elastischen Grundmaterial **(8)** ausgebildet sind sowie bei einer besonderen Ausführungsform eine Druckplatte **(21)** vorhanden ist, welche auf die den Gegenstand **(1)** nicht tragende Rückseite **(60)** des Positivformteils **(7a)** dicht auflegbar ist und in einem Freiraum **(59)** zwischen Druckplatte **(21)** und dieser Rückseite ein Druckbeaufschlagungsfluid zur Druckbeaufschlagung des Gegenstandswandmaterials einleitbar ist.

12. In eine Gegenstandswand (**3**) integrierbares Zusatzelement (**22.3**) verwendbar bei der Herstellung eines profilierten, schalenartigen Gegenstands (**1**) mit wenigstens einem Schichtmaterial **(37, 43, 45, 47, 49)** nach dem Verfahren nach Anspruch 4, **dadurch gekennzeichnet, dass** das Zusatzelement **(22.3; 71)** im Wesentlichen aus einem thermoplastischen, duroplastischen und/oder metallischen Material besteht und im Speziellen eine, insbesonders stufenartig, umlaufende Randverjüngung aufweist, welche bei im Schichtmaterial **(37, 43, 45, 47, 49)** des Gegenstands **(1)** integrierten Zusatzelement **(22.3; 71)** einen möglichst kontinuierlichen Kraftlinienverlauf zwischen Zusatzselement **(22.3; 71)** und Gegenstandswand **(3)** von auf dem Gegenstand **(1)** wirkenden Verformungskräften zum Erhalt einer dauerhaften Verbindung ermöglicht.

13. Gegenstand **(1)** hergestellt nach dem Verfahren gemäß einem der Ansprüche 1 bis 6 mit einer Formteile **(7a, 7b; 79)** aufweisenden Form **(5)** nach einem der Ansprüche 7 bis 11 vorzugsweise mit wenigstens einem Zusatzelement (**22.3**) nach Anspruch 12, **gekennzeichnet durch** eine Gegenstandswand mit wenigstens einem thermoplastischen, ersten Schichtmaterial und wenigstens einem mit einem ausgehärteten duroplastischen Tränkmaterial getränkten Gewebe als zweites Schichtmaterial (**37, 43, 45, 47, 49**).

14. Gegenstand nach Anspruch 13, **gekennzeichnet durch** ein zur Gegenstandswandinnenseite benachbart angeordnetes Glasgewebe (**37**), welches durchdrungen ist mit einem ausgehärteten duroplastartigen Tränkmittel als zweites Schichtmaterial, wobei dieses Schichtmaterial von einer, vorzugsweise geschlossenporigen, Schaummatte **(43)** bedeckt ist, auf der wiederum ein Kohlefasergewebe **(45),** durchdrungen mit einem Duroplast als weiteres zweites Schichtmaterial, liegt, welches von einer thermoplastischen Folie **(47)** als erstes Schichtmaterial bedeckt ist.

15. Gegenstand nach Anspruch 13 oder 14, **gekennzeichnet durch** eine Vliesaussenschicht **(49)** getränkt mit einem Duroplast, um eine Lackierbarkeit des Gegenstands **(1)** zu ermöglichen.

## Claims

1. Method for the manufacture of a profiled object (1), in particular of a container element, with a shell-like object wall (3) for the shaping of which a positive mould portion and a negative mould portion (7a, 7b; 79) are used, **characterized in that** at least a first, fabric-like lamination material impregnated with a thermosetting plastics impregnation material and a second lamination material (47) having thermoplastic properties are deposited in or on one of the mould portions (7a, 7b; 79) as wall material, a hardening process is started and, in order to remove the at least partially hardened object wall (3) comprising the lamination materials, at least one of the mould portions (7a) is pulled off with regionally resilient deformation.

2. Method according to Claim 1, **characterized in that** there is applied to at least one mould portion (7a) a pressure gradient including the application of a partial vacuum as well as a pressure above atmospheric pressure, wherein, after the deposition preferably of each layer (37, 43, 45, 47, 49) on or in one of the mould portions (7a), that mould portion is covered with a resilient, vacuum-tight hood (42) and an evacuation of the layer or layers (37, 43, 45, 47, 49) takes place with a partial vacuum of less than 0.8 bar, preferably below 0.1 bar, in order to achieve a bubble-free and/or crease-free condition of the object wall with a plurality of lamination materials and, for at least partial hardening, preferably only one of the mould portions (7b, 79) is subjected to a temperature gradient in order to eliminate the use of an autoclave and preferably to reduce heat capacity and heat-transmission time.

3. Method according to Claim 1 or Claim 2, **characterized in that** the second lamination material is a film having thermoplastic properties which is arranged in a manner such as to be disposed in the external region of the wall material in order to increase the scratch resistance of the exterior of the object and to prevent splintering.

4. Method according to any one of Claims 1 to 3, **characterized in that** at least one additional element (22.3; 71) is positioned in at least one of the mould portions (7a) for the reinforcement of the object wall or the anchorage of additional mechanical and/or electrical functions in the object wall.

5. Method according to any one of Claims 1 to 4, **characterized in that** a plurality of prefabricated lamination materials (37, 43, 45, 47, 49) to be superimposed on one another are used for the object wall (3) and are preferably preshaped in a manner such that they can be arranged in alignment and in abutment at the edge in order subsequently to be able to dispense with edge finishing of the object (1).

6. Method according to any one of Claims 1 to 5, **characterized in that** a glass fabric (37) impregnated with a first impregnation medium forming a thermosetting plastics material is deposited on the positive mould portion (7a) as first lamination material amongst other things to increase perforation resistance, then a foam mat (43) is deposited as core material of the object wall, and then a carbon-fibre fabric (45) impregnated with a second impregnation medium forming a thermosetting plastics material is deposited as further first lamination material for producing good strength, in a following step of the method, the lamination material (47) having thermoplastic properties is deposited and preferably, as last layer, a non-woven fabric (49) impregnated with a third impregnation material forming a thermosetting plastics material is deposited, so that a surface lacquering can be applied, and the prefabricated additional elements (22.3) are positioned in particular only after the last layer (47 or 49).

7. Mould (5) with a positive mould portion and a negative mould portion (7a, 7b; 79) for the manufacture of a profiled, shell-like object (1) with at least one lamination material (37, 43, 45, 47, 49) according to the method according to Claim 2, **characterized in that** the mould portions (7a, 7b; 79) can be brought together with the interposition of the lamination materials (37, 43, 45, 47, 49) preferably with a clearance fit, and a first (7a) of the two mould portions (7a, 7b; 79) is formed so as to be resiliently deformable regionally so that it can be pulled off the hardened object (1), the first mould portion (7a) has connection means (19) for the application of a partial vacuum and a pressure above atmospheric pressure and the second mould portion (7b; 79) has second connection means (27) and a fluid carrying means (25; 83), the second connection means (27) is in communication with the fluid carrying means (25; 83) in order automatically to carry out a temperature application to the second mould portion (7b; 79) by the supply of a heating and/or coolant fluid.

8. Mould (5) according to Claim 7, **characterized in that** one of the mould portions (7a, 7b; 79), in particular the positive mould portion (7a), has a peripheral projecting shoulder (13) which forms a stop end for each lamination material (37, 43, 45, 47, 49) to be deposited so that, after removal from the mould, processing of the edge of the object (1) is not necessary.

9. Mould (5) according to Claim 7 or Claim 8 **characterized in that** one of the mould portions (7a, 7b; 79), in particular the positive mould portion (7a), has at least one positioning aid (22.2; 74), preferably with a peripheral edge-thickness taper, in particular with a slope, in or on which prefabricated additional elements (22.3; 71) which can be incorporated in the object wall (3) and which in particular have an edge taper can be deposited in a manner such that an integrating connection with the lamination material (37, 43, 45, 47, 49), in particular a good propagation of the strain lines, takes place owing to the edge taper together with the slope.

10. Mould (5) according to any one of Claims 7 to 9, **characterized in that** one of the mould portions (7a, 7b), in particular the negative portion (7b) which is formed as second mould portion, is formed with a double wall with a wall cavity (25) into which a fluid for heating and/or cooling the mould portion can be supplied, and the material of the mould portion (7b) is preferably adapted to the thermal expansion properties of the material of the object, above all is composed of electroplated nickel and has an adequate surface quality with which an adequate surface quality of the object wall (3) can be obtained.

11. Mould according to any one of Claims 7 to 10 **characterized in that** a release film (53) is applied, preferably vulcanized, to the profile-determining surface of one of the mould portions, in particular of the positive mould portion (7a) which is formed as first mould portion, and, preferably, one of the mould portions (7a, 7b; 79), in particular the positive mould portion (7a), has locally different stiffness and resilience, wherein flat mould-portion regions (9a-9c) are formed so as to be stiff, in particular by means of insert material (10) in a resilient base material (8) and corner regions (11a, 11b) are formed so as to be resiliently deformable as a consequence preferably of non-reinforced resilient base material (8) and, in a particular embodiment, a pressure plate (21) is available, which can be applied closely to the rear side (60) of the positive mould portion (7a) that does not carry the object (1) and a pressurizing fluid can be supplied in a space (59) between the pressure plate (21) and that rear side for the application of pressure to the material of the object wall.

12. Additional element (22.3) which can be incorporated in an object wall (3) and which is usable in the manufacture of a profiled, shell-like object (1) with at least one lamination material (37, 43, 45, 47, 49) according to the method according to Claim 4, **characterized in that** the additional element (22.3; 71) is composed substantially of a thermoplastic, thermosetting-plastics and/or metallic material and in particular comprises a peripheral, particularly sloping, edge taper which, when the additional element (22.3; 71) is incorporated in the lamination material (37, 43, 45, 47, 49) of the object (1), permits as continuous as possible a course of the strain lines, between additional element (22.3; 71) and object wall (3), of deformation forces acting on the object (1), in order to maintain an enduring connection.

13. Object (1) manufactured in accordance with the method according to any one of Claims 1 to 6 with a mould (5) comprising mould portions (7a, 7b; 79) according to any one of Claims 7 to 11, preferably with at least one additional element (22.3) according to Claim 12, **characterized by** an object wall with at least one thermoplastic, first lamination material and at least one fabric impregnated with a hardened thermosetting plastics impregnation material as second lamination material (37, 43, 45, 47, 49).

14. Object according to Claim 13, **characterized by** a glass fabric (37) which is arranged adjacent the inner side of the object wall and which is penetrated by a hardened thermosetting plastics impregnation material as second lamination material, wherein this lamination material is covered by a preferably closed-cell foam mat (43) on which in turn there lies, as further second lamination, a carbon fibre fabric (45) which is penetrated by a thermosetting plastics material and which is covered by a thermoplastic film (47) as first lamination material.

15. Object according to Claim 13 or Claim 14, **characterized by** an outer layer (49) of non-woven fabric impregnated with a thermosetting plastics material in order to permit lacquering of the object (1).

## Revendications

1. Procédé pour la fabrication d'un objet profilé (1), en particulier d'une partie de récipient avec une paroi d'objet en forme de coque (3) pour la conformation duquel on utilise une partie de moule positive et négative (7a, 7b ;79), **caractérisé en ce que** dans ou sur une des parties de moule (7a, 7b ;79), en tant que matériau de paroi on applique au moins un premier matériau de couche en forme de tissu, imprégné d'un matériau d'imprégnation thermodurcissable et un second matériau de couche (47) présentant des propriétés thermoplastiques, on entame un procédé de durcissement et pour enlever la paroi de l'objet (3) présentant les matériaux de couche au moins partiellement durcis, on retire au moins l'une des parties de moule (7a) sous déformation élastique par zones.

2. Procédé selon la revendication 1, **caractérisé en ce que** sur au moins une partie de moule (7a), il est appliqué une loi de pression comprenant une application de vide partiel et une application de surpression, de sorte qu'après l'introduction ou l'application de préférence de chaque couche (37,43,4547,49) sur ou dans l'une des parties de moule (7a) celle-ci est recouverte de manière étanche en vide partiel par une housse élastique (42) et une mise sous vide de la ou des couche(s) s'effectue à un vide partiel inférieur à 0,8 bar de préférence au-dessous de 0,1 bar, pour atteindre un état sans bulles ou sans plis de la paroi de l'objet avec plusieurs matériaux de couche et pour le durcissement au moins partiel de préférence de seulement une des parties de moule (7b ;79) on fait appel à une loi de température pour éliminer l'utilisation d'un autoclave et de préférence pour réduire la capacité thermique et le temps de transition thermique.

3. Procédé selon la revendication 1 ou 2, **caractérisé en ce que** le second matériau de couche est une feuille présentant des propriétés thermoplastiques qui est disposée de telle sorte à venir s'appliquer dans la zone extérieure du matériau de paroi afin d'augmenter la résistance aux éraflures du côté extérieur de l'objet et d'empêcher la rupture en éclats.

4. Procédé selon l'une des revendications 1 à 3, **caractérisé en ce qu'**au moins un élément supplémentaire (22.3 ;71) est positionné dans au moins l'une des parties de moule (7a) pour renforcer la paroi de l'objet ou l'ancrage de fonctions mécaniques et/ou électriques supplémentaires dans la paroi de l'objet.

5. Procédé selon l'une des revendications 1 à 4, **caractérisé en ce que** pour la paroi d'objet (3) on utilise plusieurs matériaux de couche (37,43,45,47,49) superposés, préconfectionnés et préformés de façon à se trouver en alignement sur les bords et pouvoir être redressés, permettant ainsi d'éviter ultérieurement un ré -usinage des bords de l'objet (1).

6. Procédé selon l'une des revendications 1 à 5, **caractérisé en ce que** sur la partie de moule positive (7a) on applique un tissu de verre (37), imprégné d'un premier agent d'imprégnation formant une résine thermodurcissable comme premier matériau de couche, entre autres choses, afin d'augmenter la résistance au piquage, consécutivement un tapis de mousse (43) en tant que matériau de noyau de paroi d'objet, puis un tissu de fibres de carbone (45), imprégné d'un second agent d'imprégnation formant une résine thermodurcissable en tant qu'autre premier matériau de couche pour l'obtention d'une résistance supérieure, dans une étape opératoire suivante on applique le matériau de couche (47) présentant des propriétés thermoplastiques et de préférence comme dernière couche un non-tissé (49) imprégné d'un troisième agent d'imprégnation formant une résine thermodurcissable, ce faisant on peut procéder à une application de peinture en surface et en particulier, les éléments supplémentaires préfabriqués (22.3) ne sont positionnés qu'après la dernière couche (47 ou 49).

7. Moule (5) avec une partie de moule positive et une partie de moule négative (7a,7b ;79) pour la fabrication d'un objet profilé en forme de coque (1) avec au moins un matériau de couche (37,43,45,47,49) selon le procédé de la revendication 2, **caractérisé en ce qu'**en intercalant le matériau de couche (37,43,45,47,49) les parties de moule (7a,7b ;79) peuvent être assemblées de préférence avec un ajustement de jeu, et une première (7a) des deux parties de moule (7a,7b ;79) est conçue de façon déformable élastiquement par zones pour pouvoir être retirée de l'objet (1) durci, la première partie de moule (7a) présente un moyen de raccordement (19) pour une sollicitation en vide partiel et en surpression et la deuxième partie de moule (7b ;79) présente des seconds moyens de raccordement (27) et un moyen de guidage de fluide 25 ;83), les seconds moyens de raccordement (27) et le moyen de guidage de fluide (25 ;83) sont en communication afin de procéder eux-mêmes à une sollicitation en température de la seconde partie de moule (7b ;79) par mise en oeuvre d'un fluide de chauffage et/ou de refroidissement.

8. Moule (5) selon la revendication 7, **caractérisé en ce que** l'une des parties de moule (7a,7b ;79), en particulier la partie de moule positive (7a) présente un appendice circulaire (13) qui forme un arrêt pour chaque matériau de couche à appliquer (37,43,45,47,49) afin qu'après une extraction de moule il ne soit plus nécessaire de procéder à un usinage de l'arête marginale de l'objet (1).

9. Moule (5) selon la revendication 7 ou 8, **caractérisé en ce que** l'une des parties de moule (7a,7b ;79), en particulier la partie de moule positive (7a) possède au moins un auxiliaire de positionnement (22.2 ;74) avec de préférence un amincissement d'épaisseur marginale circulaire, en particulier avec un échelonnement, dans ou sur les éléments supplémentaires (22.3 ;71) préfabriqués, intégrables dans la paroi de l'objet (3), qui comportent notamment un amincissement marginal, pouvant être appliqués de telle sorte qu'il est réalisé une liaison intégrante avec le matériau de couche (37,43,45,47,49) en particulier un bon transfert des lignes de force par le biais de l'amincissement marginal conjointement avec l'échelonnement.

10. Moule (5) selon une des revendications 7 à 9, **caractérisé en ce que** l'une des parties de moule (7a,7b), en particulier la partie négative (7b) conçue comme seconde partie de moule est formée à double paroi avec un espace intérieur de paroi (25), dans lequel un fluide peut être introduit pour le réchauffement ou le refroidissement de la partie de moule, et de préférence le matériau de la partie de moule (7b) est adapté aux propriétés de dilatation thermique du matériau de l'objet, consiste surtout en nickel galvanique et présente une qualité de surface suffisante permettant de produire une qualité de surface satisfaisante pour la paroi de l'objet (3).

11. Moule selon l'une des revendications 7 à 10, **caractérisé en ce que** sur la surface déterminant le profil de l'une des parties de moule, en particulier de la partie de moule positive (7a) formant la première partie de moule il est appliqué une feuille auto-séparable (35), de préférence appliquée par vulcanisation et de préférence, une des parties de moule (7a,7b ;79), en particulier la partie de moule positive (7a) présente localement une élasticité et une rigidité variables, de sorte que de préférence les zones de moule droites (9a-9c), sont rigides en particulier par le biais d'un matériau d'insert (10) dans un matériau de base élastique (8) et les zones de coins (11a,11b) sont déformables élastiquement et sont conçues de préférence à partir d'un matériau de base élastique (8) non renforcé, et selon une forme de réalisation particulière est prévue une plaque de pression (21) de qui peut être appliquée étroitement sur le côté arrière non porteur (60) de l'objet (1) et dans un espace libre (59) entre la plaque de pression (21) et ce côté arrière un fluide de charge de pression pour la sollicitation en pression du matériau de paroi d'objet peut être introduit.

12. Elément supplémentaire (22.3) intégrable dans une paroi d'objet (3) pouvant être utilisé dans la réalisation d'un objet (1) en forme de coque, profilé avec au moins un matériau de couche (37,43,45,47,49) selon le procédé de la revendication 4, **caractérisé en ce que** l'élément supplémentaire (22.3 ;71) consiste essentiellement en un matériau thermoplastique, thermodurcissable et/ou métallique et présente notamment un amincissement marginal circulaire, en particulier échelonné qui permet pour l'élément supplémentaire (22.3 ;71) intégré dans le matériau de couche (37,43,45,47,49) de l'objet (1) un tracé de lignes de force le plus continu possible entre l'élément supplémentaire (22.3 ;71) et la paroi de l'objet (3) des forces de déformation agissant sur l'objet (1) pour obtenir une liaison durable.

13. Objet (1) fabriqué selon le procédé de l'une des revendications 1 à 6 avec un moule (5) présentant des parties de moule (7a,7b ;79) selon l'une des revendications 7 à 11 de préférence avec au moins un élément supplémentaire (22.3) selon la revendication 12, **caractérisé par** une paroi d'objet avec au moins un premier matériau de couche thermoplastique et au moins un tissu imprégné d'un matériau d'imprégnation thermodurcissable durci comme second matériau de couche (37,43,45,47,49).

14. Objet selon la revendication 13, **caractérisé par** un tissu de verre (37) disposé de façon contiguë au côté intérieur de paroi d'objet qui est imbibé d'un agent d'imprégnation thermodurcissable durci comme second matériau de couche, de sorte que ce matériau de couche est de préférence recouvert d'une nappe de mousse (43) à alvéoles fermées sur laquelle repose à nouveau un tissu de fibre de carbone (45), imbibé d'une résine thermodurcissable comme autre second matériau de couche qui est revêtue d'une feuille thermoplastique (47) comme premier matériau de couche.

15. Objet selon la revendication 13 ou 14, **caractérisé par** une couche extérieure de nappe de non tissé (49) imprégnée d'une résine thermodurcissable pour permettre une mise en peinture ou vernissage de l'objet (1).
